# EUROPÄISCHE PATENTSCHRIFT

(11) **EP 3 526 884 B1**
(45) Veröffentlichungstag und Bekanntmachung des Hinweises auf die Patenterteilung: **18.05.2022**
(21) Anmeldenummer: 17777819.8
(22) Anmeldetag: 20.09.2017
(51) Int. Cl.: H02K 5/10, H02K 3/52, H02K 5/22, H02K 11/33

(54) **VERFAHREN ZUR ELEKTRISCHEN KONTAKTIERUNG EINER WICKLUNG EINER ELEKTRISCHEN MASCHINE MIT EINER LEITERPLATTE**
METHOD FOR ELECTRICALLY CONTACT-CONNECTING A WINDING OF AN ELECTRICAL MACHINE TO A PRINTED CIRCUIT BOARD
PROCÉDÉ DE MISE EN CONTACT ÉLECTRIQUE D'UN ENROULEMENT D'UNE MACHINE ÉLECTRIQUE AVEC UNE CARTE DE CIRCUITS IMPRIMÉS

(30) Priorität: 14.10.2016 DE 102016220125
(43) Veröffentlichungstag der Anmeldung: 21.08.2019
(73) Patentinhaber: Robert Bosch GmbH, 70442 Stuttgart (DE)
(72) Erfinder: KUPERBERG, Ilya, 76149 Karlsruhe (DE); BECK, Peter, 1095 Budapest (HU); SOELLNER, Michael, 77839 Lichtenau (DE); DEVERMANN, Thomas, 77855 Achern-Fautenbach (DE); GLUECK, Wolfgang, 76532 Baden-Baden (DE); ARSLAN-HUERST, Asli, 76135 Karlsruhe (DE); MERZ, Harald, 76547 Sinzheim (DE); LEHMANN, Ralf, 77704 Oberkirch (DE)
(86) Internationale Anmeldenummer: PCT/EP2017/073750
(87) Internationale Veröffentlichungsnummer: WO 2018/069011

(56) Entgegenhaltungen:
- DE-A1-102010 029 982
- DE-T2- 69 906 915
- US-A1- 2015 222 156

## Beschreibung

Die Erfindung betrifft eine elektrische Maschine nach Gattung des unabhängigen Anspruchs 1 und ein Verfahren zum Herstellen einer elektrischen Maschine nach Gattung des unabhängigen Anspruchs 6.

### Stand der Technik

Es ist bereits ein Elektromotor umfassend eine Armatur, die eine Vielzahl von Zähnen und eine Vielzahl von Nuten aufweist, bekannt. Auch ist bekannt, dass ein elektrischer Leiter, welcher eine Wicklung bildet, von der Armatur elektrisch durch ein Isoliermittel getrennt ist.

Die US 2015/0222156 A1 und DE69906915 T2 offenbaren einen Elektromotor.

### Offenbarung der Erfindung

Die der Erfindung zugrundeliegende Aufgabe kann darin gesehen werden, eine Vereinfachung der bekannten elektrischen Maschinen zu erreichen.

Diese Aufgabe wird mittels des jeweiligen Gegenstands der unabhängigen Ansprüche gelöst.

Die erfindungsgemäße elektrische Maschine hat den Vorteil, dass trotz vereinfachter Kontaktierung, dennoch die Abdichtung gewährleistet ist.

Das erfindungsgemäße Verfahren zum Herstellen einer elektrischen Maschine mit einem Gehäuseelement hat den Vorteil, dass eine vereinfachte elektrische Kontaktierung möglich ist, wobei dennoch die Abdichtung des Gehäuseelements, in dem sich die Leiterplatte befindet, gewährleistet ist. Durch die in den Unteransprüchen aufgeführten Merkmale ergeben sich vorteilhafte Weiterbildungen und Verbesserungen.

Eine vorteilhafte Weiterbildung der Erfindung zeichnet sich durch das zumindest teilweise Entfernen der Isolierung an den Leiterenden aus, wobei insbesondere das Entfernen der Isolierung an den Leiterenden mit umlaufenden Messern oder Laser durchgeführt wird. Die Kontaktierung mit der Leiterplatte wird durch das Entfernen der Isolierung vereinfacht.

Eine besonders vorteilhafte Weiterbildung ist, dass das elektrische Kontaktieren der Leiterplatte mit den Leiterenden mittels Löten, insbesondere mittels eines Selektivlötverfahrens, vorzugsweise ein Multiwelle Verfahren durchgeführt wird. Hierdurch lässt sich auf einfache Weise eine elektrische Verbindung herstellen, die auch mechanische Beanspruchung standhält.

Ferner ist eine vorteilhafte Weiterbildung, dass die elektrische Kontaktierung mittels einem der folgenden Verfahren: Miniwelle, Handlöten, Laserlöten oder induktives Löten hergestellt wird.

Eine vorteilhafte Weiterbildung ist, dass das Anbringen der Armatur an einem Gehäuseelement, insbesondere mittels verschrauben durchgeführt wird.

Ein besonders vorteilhaftet weitergebildeter Verfahrensschritt zeichnet sich durch das Durchführen der Leiterenden durch jeweils mindestens eine Durchgangsöffnung eines zweiten Zentrierelements aus. Ferner ist vorteilhaft, dass das zweite Zentrierelement ein Zentriermittel aufweist, welches die durchgeführten Leiterenden zentriert und parallel ausrichtet. Die Leiterenden ragen nach der Durchführung aus dem zweiten Zentrierelement hinaus.

Eine besonders vorteilhafte Weiterbildung ist, dass das Zentrierelement und das Dichtungselement jeweils zwei oder mehr, insbesondere sechs, Durchgangsöffnungen aufweisen.

Ferner ist eine vorteilhafte Weiterbildung, dass zwei oder mehr, insbesondere sechs, Leiterenden von einem oder mehr, insbesondere drei, elektrischen Leitern durch jeweils eine eigene Durchgangsöffnung des Zentrierelements verlaufen. Zwei oder mehr, insbesondere sechs, Leiterenden von einem oder mehr, insbesondere drei, elektrischen Leitern verlaufen durch jeweils eine eigene Durchgangsöffnung des Dichtelements.

Weiterhin ist eine vorteilhafte Weiterbildung, dass entsprechend der Anzahl der Durchgangsöffnungen des Zentrierelements Zentriermittel ausgebildet sind, wobei die Zentriermittel zumindest teilweise jeweils in einer der Durchgangsöffnungen des Dichtelements angeordnet sind. Die Zentriermittel führen die in den Durchgangsöffnungen des Dichtelements verlaufenden Leiterenden. Die Leiterenden ragen aus dem Dichtungsmittel hinaus.

Als vorteilhafte Weiterbildung ist anzusehen, dass das Zentrierelement und das Dichtungselement jeweils zwei oder mehr Durchgangsöffnungen aufweisen. Ein einfaches Herausführen der Wicklungsleiter aus der Armatur ist ermöglicht. Ferner ist ein Abdichten des Gehäuses trotz mehrerer elektrischer Leiter mit nur einem Zentrierelement und einem Dichtelement möglich.

Eine besonders vorteilhafte Weiterbildung ist, dass das Zentriermittel einen rohrartigen Bereich aufweist. Der rohrartige Bereich ermöglicht das Zentrieren und Führen des in ihm angeordneten Leiterendes zu den Durchgangsöffnungen des Dichtelements. Die Anbringung des Dichtelements ist vereinfacht.

Eine vorteilhafte Weiterbildung ist, dass das Zentriermittel an seinem freien Ende konisch ausgebildet ist. Die konische Ausbildung vereinfacht beispielsweise das Einführen der Zentriermittel in die Durchgangsöffnungen des Dichtelements. Erfindungsgemäß weist die Durchgangsöffnung des Zentrierelements einen trichterförmigen Bereich auf. Ein Teil des trichterförmigen Bereichs der Durchgangsöffnung ist innerhalb des Zentriermittels ausgebildet. Der trichterförmige Bereich vereinfacht das Einführen eines Leiterendes in die Durchgangsöffnung des Zentriermittels.

Erfindungsgemäß weist die Durchgangsöffnung des Dichtungselements einen trichterförmigen Bereich auf. Der trichterförmige Bereich vereinfacht das Einführen des Leiterendes und des Zentriermittels des Zentrierelements in die Durchgangsöffnung des Zentriermittels.

Eine besonders vorteilhafte Weiterbildung ist, dass die Durchgangsöffnung des Dichtelements einen ersten Radius und einen zweiten Radius aufweist. Der erste Radius entspricht im Wesentlichen dem Radius des Zentriermittels des Zentrierelements und der zweite Radius ist kleiner als der erste Radius. Vorzugsweise entspricht der zweite Radius im Wesentlichen dem Radius des elektrischen Leiters. Insbesondere ist der zweite Radius geringfügig größer als der Radius des elektrischen Leiters. Es wird eine bestmögliche Abdichtung erreicht.

Eine vorteilhafte Weiterbildung ist, dass im Innenumfang der Durchgangsöffnung des Dichtelements, insbesondere im Innenumfang der Durchgangsöffnung innerhalb des Dichtmittels, mindestens eine, insbesondere umlaufende, Dichtlippe ausgebildet ist. Die Dichtlippe vereinfacht das Durchführen des Leiterendes und verbesserte die Abdichtung durch das Dichtelement.

Eine besonders vorteilhafte Weiterbildung ist, dass der Grundkörper des Dichtelements an seinem Außenumfang mindestens eine umlaufende Dichtlippe aufweist. Die Dichtlippe verbesserte die Abdichtung der Durchgangsöffnung des Gehäuseelements durch das Dichtelement.

Eine vorteilhafte Weiterbildung ist, dass die Dichtlippen am Grundkörper des Dichtelements einen axialen Abstand zu den Dichtlippen im Innenumfang der Durchgangsöffnung des Dichtelements aufweisen. Ein Toleranzausgleich wird ermöglicht.

Es ist als eine vorteilhafte Weiterbildung anzusehen, dass ein Gehäuse mit einer Durchgangsöffnung vorgesehen ist. Die Durchgangsöffnung ist korrespondierend zu dem Außenumfang des Grundkörpers des Dichtelements ausgebildet.

Eine vorteilhafte Weiterbildung ist, dass ein Führungsmittel vorgesehen ist, das so ausgebildet ist, dass es den elektrischen Leiter in axialer Richtung aus einer Armatur der elektrischen Maschine leitet.

Eine besonders vorteilhafte Weiterbildung ist, dass ein zweites Zentrierelement vorgesehen ist, welches eine Durchgangsöffnung mit insbesondere einem trichterförmigen Bereich aufweist, wobei der elektrische Leiter innerhalb der Durchgangsöffnung verläuft. Das zweite Zentrierungselement ermöglicht eine vereinfachte Ausrichtung Leiterenden gegenüber der Leiterplatte.

Als vorteilhaft Weiterbildung ist anzusehen, dass eine Leiterplatte vorgesehen ist, wobei die Leiterplatte eine Lötbohrung aufweist, an der nach der Montage ein Ende des elektrischen Leiters angeordnet, insbesondere angelötet ist.

Die elektrische Maschine ist vorzugsweise Teil eines Lüfters, insbesondere zur Kühlung eines Verbrennungsmotors oder eines elektrischen Antriebsmotors, eines HVAC Gebläses oder einer Kühlmittelpumpe.

Ausführungsbeispiele sind in den Figuren dargestellt und in der nachfolgenden Beschreibung näher erläutert. Es zeigen:
Figur 1 einen Teil einer erfindungsgemäßen elektrischen Maschine,
Figur 2 die Seite der Armatur, die im montierten Zustand dem Gehäuseelement zugerichtet ist,
Figur 3 das erste Zentrierelement, das Dichtelement, das optionale zweite Zentrierelement, die Leiterplatte und ein Ausschnitt des Gehäuseelements,
Figur 4 die Unterseite der Armatur,
Figur 5 das an de Armatur angeordnete Dichtelement und das Zentrierelement,
Figur 6 einen Schnitt durch einen Teil der erfindungsgemäßen elektrischen Maschine und
Figur 7 einen Verfahrensablauf des erfindungsgemäßen Verfahrens.

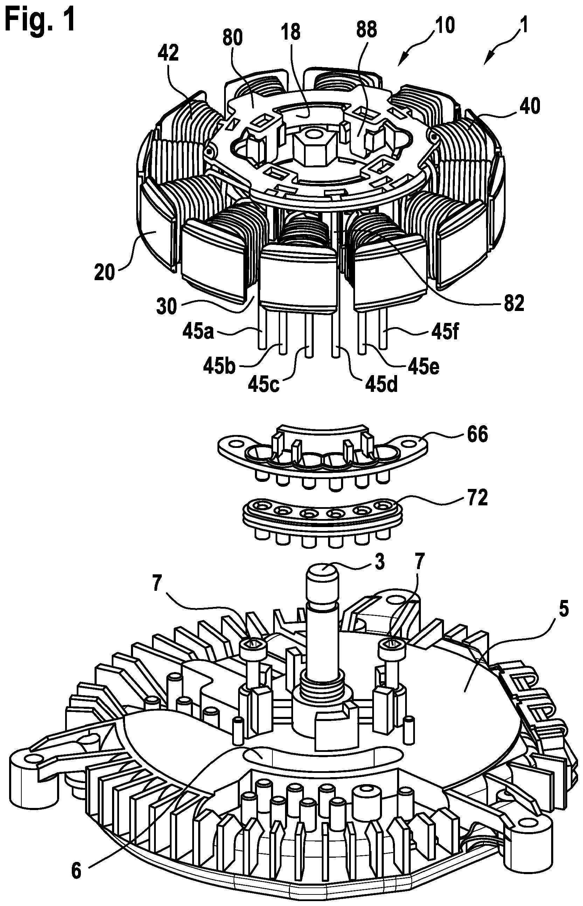

Figur 1 zeigt einen Teil einer elektrischen Maschine 1. Die elektrische Maschine 1 umfasst eine Armatur 10, eine Achse 2, ein Gehäuseelement 5, ein erstes Zentrierelement 66, ein Dichtelement 72 und mindestens einen elektrischen Leiter 42. Die Armatur 10 ist Bestandteil des Stators der elektrischen Maschine 1.

Weiterhin umfasst die elektrische Maschine 1 einen Rotor bzw. einen Läufer. Der Rotor ist der Übersichtlichkeit halber nicht gezeigt. Die elektrische Maschine 1 ist gemäß Figur 1 insbesondere als Außenläufer ausgebildet, was bedeutet, dass der Rotor sich um die Armatur 10 dreht. Der Rotor ist an der Achse 3 drehbar gelagert. Die Achse 3 ist fest mit dem Gehäuseelement 5 verbunden. Gemäß einer Weiterbildung der Erfindung ist der Rotor 3 fest mit der Achse 3 verbunden und die Achse 3 ist gegenüber dem Gehäuseelement, bzw. gegenüber der Armatur 10 drehbar gelagert.

Die Armatur 10 ist mittels Schrauben 7 mit dem Gehäuseelement 5 fest verbunden. Das Gehäuseelement 5 weist Aufnahmen mit Gewinden zur Befestigung der Schrauben 7 auf.

Die Armatur 10 weist eine Vielzahl von Zähnen 20 und einen, insbesondere im Wesentlichen ringförmigen, Armaturgrundkörper 18 auf. Die Zähne 20 sind in Umfangsrichtung mittels Nuten 30 voneinander getrennt. Der Armaturgrundkörper 18 weist eine Außenumfangsfläche auf, an der die Zähne 20 ausgebildet sind. Der Armaturgrundkörper 18 und die Zähne 20 werden insbesondere durch ein Blechpaket 12 gebildet.

Die elektrische Maschine 1 weist gemäß Figur 1 beispielhaft drei elektrische Leiter 42 auf. Um einen Zahn 20 gewickelt bildet ein elektrischer Leiter 42 eine Wicklung 40. Vorzugsweise weist jeder Zahn 20 mindestens eine Wicklung 40 auf, die durch einen elektrischen Leiter 42 gebildet ist. Die Armatur 10 gemäß Figur 1 ist für einen elektrisch kommutierten Motor mit drei Phasen ausgebildet. Vorzugsweise bilden einer der elektrischen Leiter 42 mehrere Wicklungen 40 an mehreren Zähnen 20. Beispielhaft weist die in Figur 1 gezeigte Armatur 10 zwölf Zähne 20 auf. Jeder der drei elektrischen Leiter 42 ist um vier Zähne 20 gewickelt und bildet somit an vier Zähnen 20 jeweils eine Wicklung 40. Ein Stromfluss durch die elektrischen Leiter 42 führt zu einer Erzeugung eines Magnetfelds, welches zu einer Drehbewegung des Rotors, bzw. des Läufers der elektrischen Maschine 1 führt. Der Rotor, bzw. der Läufer weist Magnete, Ferritelemente oder Element auf, die mit dem mittels der Bestromung der Wicklungen 40 erzeugte Magnetfelder zusammenwirken. Das Zusammenwirken bewirkt eine Drehbewegung des Rotors gegenüber der Armatur 10.

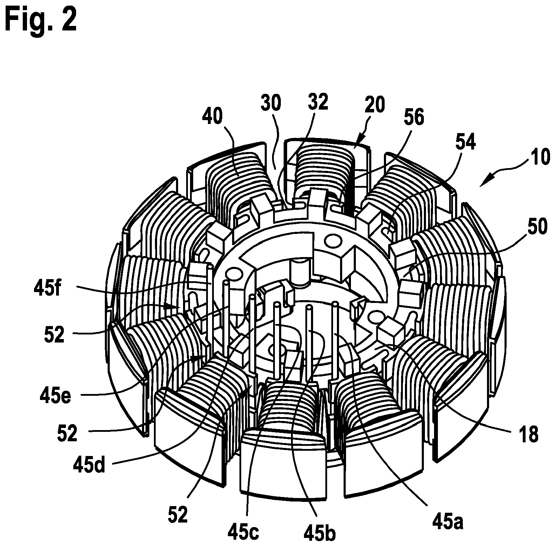

Jeder elektrischen Leiter 42 weist zwei Leiterenden 45. Die Leiterenden 45 ragen aus der Armatur 10 heraus. An die Leiterenden 45 schließt sich jeweils ein erster Leiterabschnitt 44 an. Beispielhaft sind in den Figuren 1 und 2 sechs Leiterenden 45a bis 45f gezeigt. Die Leiterenden 45a und 45d sind Teil eines Leiters 42. Die Leiterenden 45b und 45e sind Teil eines Leiters 42. Die Leiterenden 45c und 45f sind Teil eines Leiters 42.

An den ersten Leiterabschnitt 44 schließt der Teile des Leiters 42 an, der um mindestens einen Zahn 20 gewickelt mindestens eine Wicklung 40 bilden.

Ferner weist der erfindungsgemäße elektrische Maschine 1 ein Isolierelement 50 auf. Das Isolierelement 50 ist an der Armatur 10 angeordnet. Das Isolierelement 50 weist mindestens in einer Nut 30 ein Führungsmittel 52 auf. Das Führungsmittel 52 dient zur Führung des ersten Leiterabschnitts 44 innerhalb der Armatur. Die Führung des ersten Leiterabschnitts 44 erfolgt durch die Anordnung innerhalb des Führungsmittels 52.

Gemäß einer Weiterbildung erstreckt sich das Isolierelement 50 auf mindestens einen Zahn 20.

Das Isolierelement 50 wird insbesondere mittels Anspritzen eines elektrisch isolierenden Materials, an die Armatur 10 erzeugt. Ferner kann das Isolierelement 50 durch ein Element oder mehrere Elemente gebildet werden, welches insbesondere in Axialrichtung der elektrischen Maschine an die Armatur 10 angeordnet, insbesondere angesteckt ist. Ferner kann sich das Isolierelement 50 aus mehreren Teilen zusammensetzten. Das Isolierelement 50 besteht beispielsweise aus Kunststoff oder Harz.

Die Axialrichtung der elektrischen Maschine 1 entspricht der Längsrichtung der elektrischen Maschine 1. Die Axialrichtung des Elektromotors 1 verläuft parallel zu der Achse 3, bzw. der Welle der elektrischen Maschine 1.

Figur 2 zeigt die Seite der Armatur 10, die im montierten Zustand dem Gehäuseelement 5 zugerichtet ist. Jede Nut 30 weist einen Nutgrund 32 auf. Die Nut 30 erstreckt sich vom äußeren Umfang der Armatur 10 bis hin zum Nutgrund 32. Der Nutgrund 32 ist teilweise durch den Außenumfang des Armaturgrundkörpers 18 gebildet. Innerhalb der Nut 30, insbesondere im Bereich des Nutgrundes 32, sind zwei Führungsmittel 52 ausgebildet.

Die Führungsmittel 52 weisen jeweils eine Führungsmittelnut 54 und einen Abstandshalter 56 auf. Ein Führungsmittel 52 trennt einen ersten Leiterabschnitt 44 mithilfe des Abstandshalters 56 von weiteren Leitern 42 bzw. von weiteren Teilen des Leiters 42. Das Führungsmittel 52, insbesondere der Abstandshalter 56, trennt den Leiterabschnitt 44 von dem weiteren Teil des Leiters 42. Auch trennt der Abstandshalter 56 den ersten Leiterabschnitt 44 innerhalb des Führungsmittels 52 von weiteren ersten Leiterabschnitten 44.

Die Länge, insbesondere die Länge in Umfangsrichtung der Armatur 10, des Abstandshalters 56 entspricht mindestens der Dicke der Wicklungen 40 innerhalb einer Nut 30. Eine entsprechende Ausbildung verhindert ein Abrutschen von Teilen der Wicklung 40 in die Führungsmittelnut 54.

Die Führungsmittelnuten 54 weisen eine Öffnung auf. Die Öffnungen der Führungsmittelnuten 54, bzw. die Öffnungen der Führungsmittel 52, die sich innerhalb einer Nut 30 befinden, sind, insbesondere im Wesentlichen, einander zugewandt. Die Öffnung der Führungsmittel erstreckt sich über die gesamte Länge des Führungsmittels 52. Die Führungsmittel 52 bzw. die Führungsmittelnuten 54 verlaufen insbesondere in Längsrichtung der Armatur 10. Die Führungsmittel 52 führen den ersten Leiterabschnitt 44 in Axialrichtung der Armatur 10.

Ein optionales Klemmelement 80 ist beispielhaft in Figur 1 gezeigt. Das Klemmelement 80 ist im Wesentlichen ringförmig ausgebildet. Der ringförmige Bereich sorgt dafür, dass der Teil der Wicklungsdrähte 42, der an den ersten Wicklungsleiterabschnitt 44 anschließt, und der parallel zu Oberfläche des Grundelements 81 an dem Zahn verläuft, axial fixiert ist.

Das Klemmelement 80 weist ein Anpressmittel auf. Das Anpressmittel erstreckt sich in radialer Richtung zumindest über einen Teil der Umfangsfläche des Grundelements. Das Anpressmittel berührt einen Teil der Wicklungen im Bereich des Nutgrunds 32. Es verhindert ein axiales Verschieben der ersten Wicklungsleiter 44 in dem es einen Anschlag bildet. Vorzugsweise ist es, insbesondere über radial ausgebildete, Stege mit einem Grundelement des Klemmelements 80 verbunden. Das Anpressmittel ist in dem Bereich des Grundelements ausgebildet, der den axial herausgeführten Leiterenden 45a bis 45f gegenüberliegt. Beim Durchführen der Leiterenden 45 durch die Durchgangsöffnungen 67 und 72 verhindert es axiales verschieben des ersten Wicklungsleiterabschnitts 44 innerhalb der Führungsmittel 52.

An dem Klemmelement 80 ist mindestens ein Klemmfuß 82 ausgebildet. Der Klemmfuß 82 weist ein freies Ende auf, welches zwischen den Führungselement 52 eingeschoben wird. Die Klemmfüße 82 sind in Umfangsrichtung beanstandet zueinander ausgebildet. Die Klemmfüße verhindern beim Durchführen der Leiterenden 45 durch die Durchgangsöffnungen 67 und 72, dass die Leiterabschnitte 44 aus den Führungsmittelnuten 54 gedrückt werden.

Ferner ist an dem Klemmelement 80 mindestens ein Arretierungsmittel 88 ausgebildet. Die Arretierungsmittel 88 sind so ausgebildet, dass sie nach der Montage eine lösbare Verbindung, insbesondere eine lösbare Rastverbindung, mit der Armatur 10, insbesondere dem Isolierelement 50 herstellen.

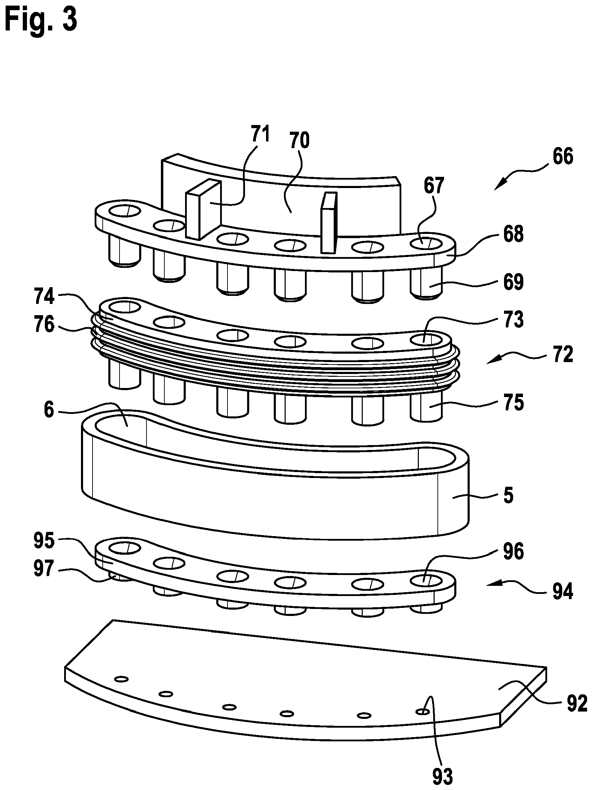

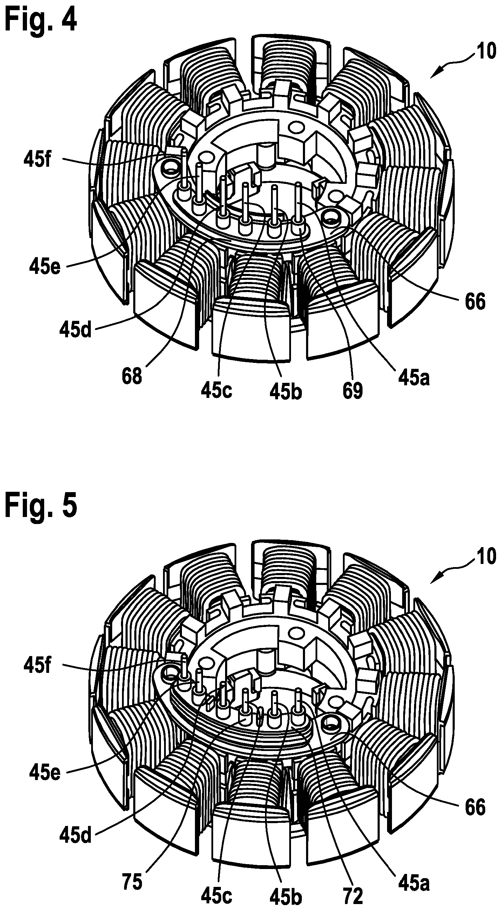

In Figur 3 ist das erste Zentrierelement 66, dass Dichtelement 72, das optionale zweite Zentrierelement 76, die Leiterplatte 92 und ein exemplarischer Ausschnitt des Gehäuseelements 5 dargestellt. Das in Zentrierelement 66 umfasst einen Grundkörpers 68. Der Grundkörper 68 weist eine Biegung auf. Die Biegung des Grundkörpers 68 entspricht der Biegung des Grundköpers 18 der Armatur 10. Die Biegung des Grundköpers 68 des Zentrierelements 66 ist bananenförmig. Das Zentrierelement 66 hat die Form eines Ringsegments. Vorzugsweise entspricht die Biegung des Grundkörpers 68 der Biegung der Armatur 10 mit dem gleichen radialen Abstand von der Achse 3. Das erste Zentrierelement 66 weist mindestens eine Durchgangsöffnung 67 auf. Insbesondere weist das Zentrierelement 66 für jeden Leiterabschnitt 45, der aus der Armatur 10 geführt ist, eine Durchgangsöffnung 67 auf. Beispielsweise weist das erste Zentrierelement 66 gemäß Figur 4 sechs Durchgangsöffnungen 67 auf. Senkrecht zur Oberfläche des Zentrierelements 66 sind Zentriermittel 69 ausgebildet. Die Durchgangsöffnungen 67 des Zentrierelements 66 erstrecken sich jeweils durch eines der Zentriermittel 69. Die Zentriermittel 69 weißen insbesondere einen rohrartigen Bereich auf. Die Zentriermittel weißen an ihrem freien Ende eine konische Ausbildung auf. Die konische Ausbildung ermöglicht ein vereinfachtes Einführen der Zentriermittel 69 in eine Durchgangsöffnung 73 des Dichtelements 72. Die Zentriermittel 69 sind an der der Armatur 10 gegenüberliegenden Seite des Zentrierelements 67 ausgebildet.

Das Zentriermittel 66 weist ein erstes Ausrichtungsmittel 70 auf. Das erste Ausrichtungsmittel 70 erstreckt sich in axialer Richtung über einen Teilbereich entlang des Außenumfangs des Grundkörpers 68 des Zentrierelements 66. Insbesondere erstreckt sich das erste Ausrichtungsmittel 70 an dem Außenumfang des Grundkörpers 68, der nach der Montage der Achse 3 der elektrischen Maschine 1 zu gerichtet ist. Insbesondere erstreckt sich das erste Ausrichtungsmittel über mindestens vier Durchgangsöffnungen 67 des Zentrierelements 66.

Die zweiten Ausrichtungsmittel 67 sind axial an dem Grundelement 68 ausgebildet. Vorzugsweise sind zwei zweite Ausrichtungsmittel 67 ausgebildet. Die zwei zweiten Ausrichtungsmittel 67 sind auf der dem Zentriermittel 69 gegenüberliegenden Seite des Grundkörpers 68 des Zentrierelements 66 angeordnet. Die zweiten Ausrichtungsmittel 71 sind insbesondere quadratisch ausgebildet. Die zweiten Ausrichtungsmittel 71 sind mit einer ersten Umfangsfläche an dem Grundkörper 68 angeordnet. Die zweiten Ausrichtungsmittel sind mit einer zweiten Umfangsfläche die senkrecht zur ersten Umfangsfläche ist, an dem ersten Ausrichtungsmittel 70 angeordnet. Die Ausrichtungsmittel 70, 71 verhindern eine Bewegung der des Zentrierelements 66 in Umfangsrichtung oder in radialer Richtung gegenüber der Armatur 10. Das Zentriermittel kann beliebig viele Ausrichtungsmittel 71 aufweisen. Beispielhaft weist das Zentriermittel 66 gemäß Figur 1 vier zweite Ausrichtungsmittel 71 auf.

Das Zentrierelement 66 ist insbesondere einstückig ausgebildet.

Das Dichtelement 72 weist Durchgangsöffnungen 73 auf. Beispielsweise weist das Dichtelement 72 sechs Durchgangsöffnungen 73 auf. Ferner weist das Dichtelement 72 einen Grundkörpers 74 auf. Der Grundkörpers 74 weist eine Biegung auf. Die Biegung des Grundkörpers 74 des Dichtelements 72 entspricht der Biegung des ersten Zentrierelements 66. In axialer Richtung sind an dem Dichtelement 72 Dichtungsmittel 75 ausgebildet. Die Dichtungsmittel 75 sind an der der Armatur 10 abgewandten Seite des Dichtelements 72 ausgebildet Die Durchgangsöffnung 73 des Dichtelements 72 erstreckt sich durch das Dichtungsmittel 75. Am Außenumfang des Grundkörpers 72 ist mindestens eine Dichtlippe 76 ausgebildet. Insbesondere sind am Außenumfang drei Dichtlippen 76 ausgebildet. Die Dichtlippen 76 erstrecken sich über den gesamten Außenumfang. Der Grundkörper 74 des Dichtelements 72 weist mindestens eine vollständig umlaufende Dichtlippe 76 auf. Die Dichtlippen 76 sind in axialer Richtung beabstandet zueinander angeordnet.

Das Gehäuseelement 5 weist eine Durchgangsausnehmung 6 auf. Das Gehäuseelement 5 ist in Figur 4 vereinfacht dargestellt. Das Dichtelement 5 ist nach der Montage innerhalb der Durchgangsausnehmung 6 des Gehäuseelements 5 platziert.

Ferner ist ein zweites Zentrierelement 94 vorgesehen. Das zweite Zentrierelement 94 weist einen Grundkörper 95 auf, wobei der Grundkörpers 95 gleich wie der Grundkörpers 68 des ersten Zentrierelements 66 ausgebildet ist. Der Grundkörper 95 des zweiten Zentrierelements 94 weist eine Biegung auf. Die Biegung des Grundkörpers 95 des zweiten Zentrierelements 94 entspricht der Biegung des Grundkörpers 68 des ersten Zentrierelements 66. An dem Grundkörper des zweiten Zentrierelements 94 sind Zentrierungsmittel 97 ausgebildet. Die Durchgangsöffnungen 96 erstrecken sich durch den Grundkörper 95 und die Zentrierungsmittel 97.

Eine Leiterplatte 92 dient zur elektrischen Ansteuerung der elektrischen Maschine 1. Die Leiterplatte weist Lötbohrungen 93 auf.

In Figur 4 ist die Unterseite der Armatur 10, wie bereits in Figur 2 gezeigt, gezeigt. An der Armatur 10 ist das erste Zentrierelement 66 angeordnet. Beispielhaft ist das erste Zentrierelement gemäß Figur 1 angeordnet. Es kann jedoch auch das erste Zentrierelement gemäß Figur 4 angeordnet werden. Bei der Anordnung werden die Leiterenden 45 durch die Durchgangsöffnungen 67 des ersten Zentrierelements 66 geführt. Die Zentriermittel 69 des Zentrierelements 66 bewirken eine Zentrierung und Ausrichtung der Leiterenden 45 in axialer Richtung der elektrischen Maschine 1. Das Zentrierelement 66 ermöglicht beispielsweise ein einfaches gleichzeitiges zentrieren von einer Vielzahl von Leiterenden 45 der elektrischen Leiter 42.

In Figur 5 ist das Dichtelement 72 an dem Zentrierelement 66 und der Armatur 10 angeordnet. Die Zentriermittel 69 des Zentrierelements 66 sind in die Durchgangsöffnung 73 des Dichtelements 72 eingeschoben. Die Zentriermittel 69 bewirken eine zentrierte Führung des zweiten Leiterabschnitts 45 durch die Durchgangsausnehmung 73 der Dichtelements 72. Die Zentriermittel 69 des Zentrierelements 66 bewirkt ein einfaches Einführen, bzw. ein einfaches Durchführen der Leiterenden 45 durch die Durchgangsöffnungen 73 des Dichtelements 72.

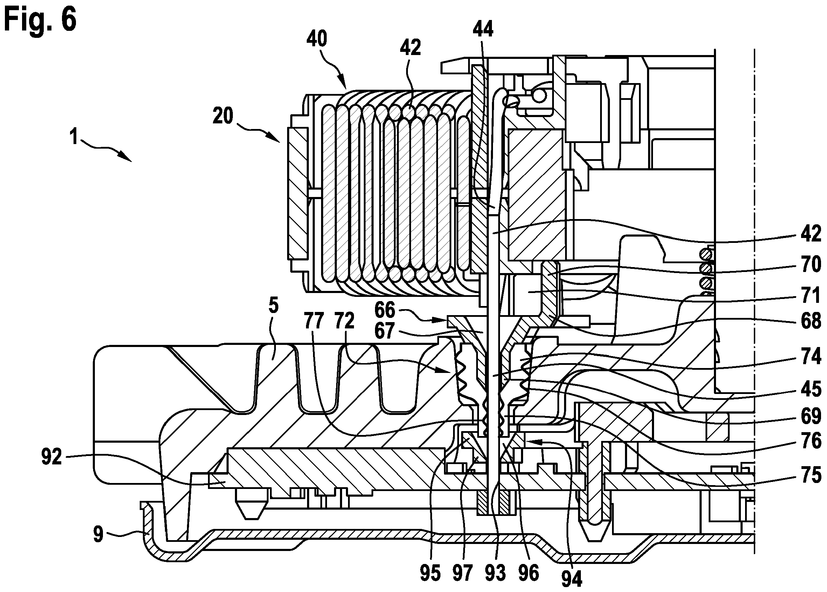

Figur 6 zeigt einen Schnitt durch die elektrische Maschine 1. Es ist zu entnehmen wie der elektrische Leiter 42 eine Wicklung 40 bildet. Ferner wird der Leiter 42 als erster Leiterabschnitt 44 innerhalb der Führungsmittelnut 54 geführt. Das Leiterende 45 schließt sich an den ersten Leiterabschnitt 44 an. Das Leiterende 45 und der erste Leiterabschnitt 44 sind Teil des elektrischen Leiters 42. Das Leiterende 45 verläuft durch die Durchgangsausnehmung 67 des ersten Zentrierelements 66, die Durchgangsausnehmung 73 des Dichtelements 72 und die Durchgangsausnehmung 96 des zweiten Zentrierelements 94.

Die Durchgangsausnehmung 67 des ersten Zentrierelements 66 weist einen trichterförmigen Bereich auf. Ein Teil des trichterförmigen Bereichs ist innerhalb des Zentriermittels 69 des Zentrierelements 66 ausgebildet. Die Durchgangsöffnung 67 weist einen kreisrunden Einlass auf. Durch die trichterförmige Ausbildung der Durchgangsöffnung 67 wird ein vereinfachtes Einführen des Leiterendes 45 in die Durchgangsausnehmung 67 und damit in das erste Zentrierelement 66 erreicht. Im Bereich des Zentriermittels 69 weist die Durchgangsöffnung 67 nur einen geringfügig größeren Durchmesser als der Durchmesser des Leiterendes 45 auf. Es ist damit eine bessere Führung und damit eine Zentrierung des Leiterendes 45 ermöglicht. Beim Einführen des Leiterendes 45 in das Zentriermittel wird das Leiterende 45 radial ausgerichtet. Die Zentrierung ermöglicht ein einfaches Aufschieben und Anbringen des Dichtelements 72.

Die Durchgangsöffnung 73 des Dichtelements 72 weist einen trichterförmigen Bereich auf. Ferner weist die Durchgangsöffnung 73 des Dichtelements 72 einen ersten Radius und einen zweiten Radius auf. Der erste Radius ist im Wesentlichen der Radius des Zentriermittels 69 des Zentrierelements 66. Der zweite Radius ist kleiner als der erste Radius. Der zweite Radius entspricht im Wesentlichen dem Radius des Leiters 42. Der Übergang vom Bereich mit dem ersten Radius zu dem Bereich mit dem zweiten Radius erfolgt mittels einer kegelstumpfförmigen Abschrägung.

Das Dichtelement 72 weist am Innenumfang der Durchgangsausnehmung 73 mindestens eine zweite Dichtlippe 77 auf. Insbesondere weist das Dichtelement drei zweite Dichtlippen 77 auf. Die zweiten Dichtlippen 77 berühren den Leiter 42. Die zweiten Dichtlippen 77 verhindern ein durchströmen eines Fluid entlang des elektrischen Leiters 42. Die ersten Dichtlippen 76 verhindern ein Durchströmen der Durchgangsöffnung 6 des Gehäuseelements 5. Die zweiten Dichtlippen 77 sind mit einem gewissen Abstand axial zu einander ausgebildet.

Die Dichtlippen 76 am Grundkörper 74 des Dichtelements 72 weisen einen axialen Abstand zu den Dichtlippen 77 im Innenumfang der Durchgangsöffnung 73 des Dichtelements aufweisen. Das erste Zentrierelement 66 und das zweite Zentrierelement 94 bzw. Armatur 10 und Leiterplatte 92 können einen großen radialen Versatz zueinander haben. Befinden sich die Dichtlippen 76 außen am Dichtelement 72 und die inneren Dichtlippen 77 axial auf derselben Ebene, kann das zu einseitiger Pressung auf die Dichtlippen 76, 77 führen. Bei großem radialem Versatz kann dies zu Undichtheit führen. Durch den axialen Abstand der inneren Dichtlippen 77 und äußeren Dichtlippen 76 zueinander werden Toleranzen ausgeglichen. Die Dichtung ist elastisch und passt sich an die Durchgangsöffnung 6 des Gehäuses 5 an. Im Bereich der inneren Dichtlippen 77 passt sich die Dichtung an die Lage des elektrischen Leiters 42 an.

Das zweite Zentrierelement 94 weist einen trichterförmige Durchgangsöffnung 96 auf. Die trichterförmige Durchgangsausnehmung 96 ermöglicht das vereinfachte Einführen und Durchführen des Leiters 45. Der Durchmesser der Durchgangsöffnung 96 im Bereich des Zentrierungsmittel 97 ist nur minimal größer wie der Durchmesser des elektrischen Leiters 42. Hierdurch wird erreicht, dass das zweite Zentrierelement 94 den elektrischen Leiter ausrichtet. Die Ausrichtung bewirkt, dass die Enden des elektrischen Leiters 42 genau in Lötbohrungen 93 der Leiterplatte 92 eingeführt werden können. Nach Einführung des elektrischen Leiters 42 in die Lötbohrung 93 der Leiterplatte 92 können diese miteinander verlötet werden.

Das Zentrierelement 66 drückt das Dichtelement 72 an.

Ein Gehäuseelement 9 bildet zusammen mit dem Gehäuseelement 5 ein Gehäuse. In dem Gehäuse sind insbesondere die Elektronik bzw. Leiterplatte 92 angeordnet. Durch das Dichtelement 72 ist der Innenraum, in dem die Leiterplatte 92 angeordnet ist, gegenüber fluiden aus der Umgebung geschützt.

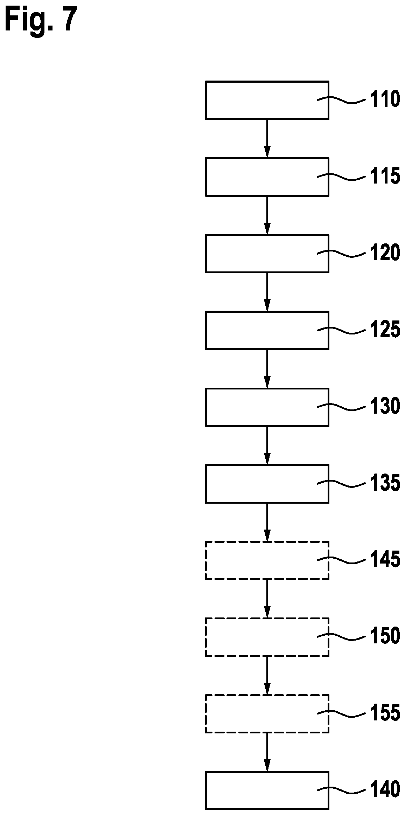

In Figur 7 ist ein erfindungsgemäßes Verfahren 100 dargestellt. Das erfindungsgemäße Verfahren 100 dient zur elektrischen Kontaktierung einer Wicklung mit einer Leiterplatte 92 einer elektrischen Maschine 1. Das erfindungsgemäße Verfahren 100 umfasst eine Vielzahl von einzelnen Verfahrensschritten, die im Folgenden aufgeführt werden. Die Reihenfolge der aufgeführten Verfahrensschritte kann hierbei vertauscht werden. Auch können einzelne Verfahrensschritte entfallen.

Ein Verfahrensschritt 110 umfasst das Herausführen der Leiterenden 45 des elektrischen Leiters 42. Die Leiterenden 45 werden in axialer Richtung der elektrischen Maschine 1 aus dieser, bzw. der Armatur 10 geführt. Figur 2 zeigt eine entsprechende Armatur 10, aus der die Leiterenden 45a bis 45f axial herausgeführt wurden.

Ein weiterer Verfahrensschritt 115 umfasst das Kürzen der Leiterenden 45 auf die gleiche Länge. Hierbei werden die Leiterenden 45 welche aus der Armatur 10 herausragen auf eine im Wesentlichen gleiche Länge gekürzt. Das Kürzen erfolgt insbesondere mittels eines Trennverfahrens, vorzugsweise Laserschneiden, Abzwicken, Abschneiden.

Ein weiterer Verfahrensschritt 120 umfasst das Durchführen der Leiterenden 45 durch jeweils eine Durchgangsöffnung 67 des Zentrierelements 66. Das Zentrierelement 66 weist für jedes der Leiterenden 45 eine Durchgangsöffnung 76 auf. In dem Verfahrensschritt werden gleichzeitig alle Leiterenden 45 durch jeweils eine Durchgangsöffnung 67 des Zentrierelements 66 geführt. Die Zentriermittel 69 des Zentrierelements 66 führen beim Durchführen der Leiterenden 45 zu einer parallelen Ausrichtung und Zentrierung der einzelnen Leiterenden 45 zueinander. Ferner werden die Leiterenden 45 radial gegenüber der Welle 3 ausgerichtet. Das Durchführen der Leiterenden 45 durch das die Durchgangsöffnungen 67 des Zentrierelements 66 erfolgt mittels anordnen, insbesondere in axialer Richtung, des Zentrierelements 66 an der Armatur 10. Vorzugsweise wird das Zentrierelement 66 in auf die Armatur 10 zubewegt. Hierbei muss lediglich darauf geachtet werden, dass die Leiterenden 45 in die Durchgangsöffnungen 67 des Zentrierelements 66 eingeführt werden.

Figur 4 zeigt eine Armatur 10 an der das Zentrierelement 66 angeordnet wurde. Ferner zeigt es wie die Leiterenden 42a bis 42f parallel zueinander ausgerichtet sind. Die Leiterenden 45, welche durch ein Zentriermittel 69 verlaufen sind gegenüber einander zentriert ausgerichtet. Die Leiterenden 45 ragen nach dem Durchführen durch das Zentrierelement 66 aus diesem heraus. Die Leiterenden 45 ragen auf der der Armatur 10 abgewandten Seite des Zentrierelements 66 aus diesem heraus. Das Zentrierelement 66 ermöglicht durch seine Zentrierung und seine Führung ein einfaches Einführen der Leiterenden 45 in die Durchgangsöffnungen des Dichtelements 72.

In einem weiteren Verfahrensschritt 125 werden die Leiterenden 45 durch jeweils eine der Durchgangsöffnungen des Dichtelements 72 geführt. Das Zentrierelement 66 hat beim Durchführen der Leiterenden 45 diese bereits so ausgerichtet, das ein einfaches Durchführen der Leiterenden durch das Dichtelement 72 möglich ist. Die Leiterenden 45 ragen nach dem Durchführen durch das Dichtelement 72 aus diesem heraus. Die Leiterenden 45 werden hierbei durch die Durchgangsöffnung 73 des Dichtelements 72 hindurch geschoben. Die Zentrierung durch das Zentrierelement 66, insbesondere die Zentriermittel 69 bewirkt, dass die Leiterenden 45 mittig, bzw. zentriert durch die Durchgangsöffnung 73 des Dichtelements 72 geschoben, insbesondere geführt werden können.

Das Zentrierelement 66 wird mithilfe der Ausrichtungsmittel 70 und 71 und korrespondierend ausgebildeten Mittel an der Armatur 10 fixiert. Eine Bewegung in Umfangsrichtung oder in radialer Richtung ist nicht mehr möglich.

Ein weiterer Verfahrensschritt 130 umfasst das Einführen der Zentriermittels 69 des Zentrierelements 66 in die Durchgangsöffnungen 73 des Dichtelements 72. Insbesondere erfolgt hierbei kein Durchführen, das bedeutet, dass die Zentriermittel 69 nicht auf der anderen Seite des Dichtelements heraustreten bzw. herausragen. Die Zentriermittel 69 werden lediglich teilweise bzw. vollständig in die Durchgangsöffnung 73 des Dichtelements 72 eingeführt. Jedes Zentriermittel 79 wird in eine eigene Durchgangsöffnung 73 des Dichtelements 72 eingeführt. In Figur 5 wurden die Verfahrensschritte 110, 115, 120, 125 und 130 durchgeführt. Das Dichtelement 72 liegt an dem Zentrierelement 66, welches an der Armatur 10 anliegt an. Das Dichtelement 72 verhindert insbesondere durch sein Dichtmittel 75 ein Durchströmen von Fluiden durch die Durchgangsöffnungen 73 des Dichtelements 72.

Die in die Durchgangsöffnungen 73 des Dichtelements 72 eingeführten Zentriermittel 69 fixieren das Dichtelement 72 an dem Zentrierelement 66.

In einem weiteren Verfahrensschritt 135 wird das Dichtelement 72 innerhalb der Durchgangsöffnung 6 des Gehäuseelements 5 angeordnet. Hierzu wird das Dichtelement 72 axial in die Durchgangsöffnung 6 eingeschoben. Durch das Anliegen des Dichtelements 72 an dem Zentrierelement 66 wird ein Verdrehen oder Verkippen des Dichtelements 66 beim Einführen in die Durchgangsöffnung 6 des Gehäuseelements 5 verhindert. Das Zentrierelement 66 führt das Dichtelement 72 beim Einführen des Dichtelements 72 in die Durchgangsöffnung 6 des Gehäuseelements 5.

In einem weiteren Schritt 140 erfolgt die elektrische Kontaktierung der Leiterenden 45 mit der Leiterplatte 92. Die Leiterplatte 92 weist hierzu vorzugsweise Leiterbohrungen 93 auf. Gemäß Figur 3 sind die Leiterbohrungen 93 lediglich als Ausnehmungen an der Oberfläche der Leiterplatte 92 ausgebildet. Gemäß einer Weiterbildung entsprechend Figur 6 wird das Leiterende durch eine durchgängige Leiterbohrung 93 der Leiterplatte 92 geführt. Anschließend werden die Leiterenden auf der der Armatur 10 abgewandten Seiten der Leiterplatte 92 mit der Leiterplatte 92 elektrisch kontaktiert.

Die elektrische Kontaktierung der der Leiterenden 45 mit der Leiterplatte 92 erfolgt mittels Löten, insbesondere Weichlöten. Weichlöten weist eine Prozesstemperatur kleiner 450°C auf. Beim Löten erfolgt ein stoffschlüssiges Fügen der Werkstoffe der Leiterenden 45 mit der Leiterplatte 92, insbesondere den Leitern der Leiterplatte 92. Hierzu wird ein Lot geschmolzen oder das Lot entsteht durch Diffusion an den Grenzflächen der Leiterenden 45 bzw. der Leiterplatte 92. Beim Löten wird eine Oberflächenlegierung erzeugt ohne die Leiterplatte 92 oder die Leiterenden 45 in der Tiefe aufzuschmelzen. Vorzugsweise wird ein Selektivlötverfahren, welches eine Variante des Wellenlötens ist, eingesetzt. Beim selektiven Löten wird nicht die ganze Baugruppe, sondern nur ein kleiner Teil mittels einer in "Miniaturwelle" gelötet. Vorzugsweise werden gleichzeitig alle Leitungsenden 45 mit der Leiterplatte 92 mittels mehrerer Miniaturwellen verbunden. Entsprechend wird ein Lötgerät verwendet, welches mehrere Miniaturwellen bzw. eine Multiwelle, die aus mehreren Miniaturwellen besteht, erzeugen kann. Ferner kann das Löten auch mittels Handlöten, Laserlöten oder induktiven Löten durchgeführt werden.

Vorzugsweise wird eine spezielle Legierung des Lots verwendet. Insbesondere wird bleifreies Lot oder InnoLot verwendet. Vorzugsweise werden Lotlegierungen basierend auf den Standards DIN EN ISO 9453 und DIN EN ISO 3677 verwendet.

In einem weiteren optionalen Verfahrensschritt 145 wird zumindest teilweise die Isolierung der Leiterenden 45 entfernt. Durch die Entfernung der Isolierung an den Leiterenden 45 wird der die elektrischen Signale führende Draht freigelegt. Hierdurch kann die elektrische Kontaktierung gemäß Verfahrensschritt 140 vereinfacht ausgeführt werden. Die Isolierung der Leiterenden 45 wird mittels Messern oder Laser entfernt. Die Entfernung erfolgt an den freien Enden der Leiterenden 45. Auch ist denkbar die Isolierung in einem Teilbereich aufzuschmelzen oder zu verbrennen.

In einem weiteren Verfahrensschritt 150 wird die Armatur 10 an dem Gehäuseelement 5 angebracht. Die Armatur 10 wird insbesondere mittels der Schrauben 7 mit dem Gehäuseelement 5 verbunden. Der Verfahrensschritt 150 wird vorzugsweise gleichzeitig mit dem Verfahrensschritt 135 durchgeführt. Insbesondere erfolgen beide Verfahrensschritte beim Zusammenführen der Armatur 10 und des Gehäuseelements 5.

In einem weiteren optionalen Verfahrensschritt 155 werden die aus dem Dichtelement 72 herausragenden Leiterenden 45 durch jeweils eine Durchgangsöffnung 96 eines zweiten Zentrierelements 94 geführt. Die Zentriermittel des zweiten Zentrierelements 94 bewirken ein paralleles Ausrichten der Leitungsenden 45. Insbesondere ist dieser Schritt dann notwendig, wenn die Leitungsenden 45 beim Durchführen durch das Dichtelement 72 nicht mehr axial ausgerichtet sind. Ferner bewirkte das zweite Zentrierungselement 94 mit seinem Zentriermitteln 97 ein zentrieren und paralleles ausrichten der Leitungsenden 45. Die Leitungsenden 45 ragen nach dem Durchführen durch das zweite Zentrierelement 94 aus diesem heraus.

## Patentansprüche

1. Elektrische Maschine (1) aufweisend,
• mindestens einen elektrischen Leiter (42),
• eine Armatur (10) mit einer Vielzahl von Zähnen, wobei zumindest eine Wicklung (40), welche durch den elektrischen Leiter (42) gebildet ist, an einem der Zähne ausgebildet ist,
• ein Zentrierelement (66) mit mindestens zwei Durchgangsöffnungen (67) und
• ein Dichtelement (72) mit mindestens zwei Durchgangsöffnungen (73),
• wobei der elektrische Leiter (42) zwei Leiterenden aufweist, die jeweils durch eine der Durchgangsöffnungen (67, 73) des Zentrierelements (66) und des Dichtelements (72) verlaufen,
• wobei das Dichtelement (72) einen Grundkörper (74) und mindestens zwei Dichtungsmittel (75) aufweist, wobei sich jede der Durchgangsöffnungen (73) des Dichtelements (72) durch den Grundkörper (74) und eines der Dichtungsmittel (75) erstreckt, und
• wobei die durch das Dichtungselement (75) und das Zentrierelement (66) verlaufenden Leiterenden (45) aus diesen herausragen, und
• wobei die Leiterenden (45), insbesondere an deren Enden, mittels Löten mit einer Leiterplatte (92) elektrisch verbunden sind,
**dadurch gekennzeichnet, dass**
• das Zentrierelement (66) einen Grundkörper (68) und mindestens zwei Zentriermittel (69) aufweist, wobei sich jede der Durchgangsöffnungen (67) des Zentrierelements (66) durch den Grundkörper (68) und eines der Zentriermittel (69) erstreckt, wobei die Zentriermittel (69) des Zentrierelements (66) eine Zentrierung der Leiterenden (45) und eine Ausrichtung der Leiterenden (45) in die axiale Richtung bewirken, und
• wobei die Zentriermittel (69) jeweils zumindest teilweise innerhalb einer der Durchgangsöffnungen (73) des Dichtelements (72) angeordnet sind,
• wobei die in den Durchgangsöffnungen (73) des Dichtelements (72) verlaufenden Leiterenden (45) über die Zentriermittel (69) geführt sind,
• wobei jede der Durchgangsöffnungen (67) des Zentrierelements (66) einen trichterförmigen Bereich aufweist, wobei ein Teil des trichterförmigen Bereichs der Durchgangsöffnungen (67) innerhalb eines Zentriermittels (69) ausgebildet ist,
• wobei zumindest eine der Durchgangsöffnungen (73) des Dichtelements (72) einen trichterförmigen Bereich aufweist.

2. Elektrische Maschine (1) gemäß dem vorhergehenden Anspruche, **dadurch gekennzeichnet, dass** ein Gehäuse (5) mit einer Durchgangsöffnung (6) vorgesehen ist, wobei die Durchgangsöffnung (6) korrespondierend zu dem Außenumfang des Dichtelements (72) ausgebildet ist.

3. Elektrische Maschine (1) gemäß einem der vorhergehenden Ansprüche, **dadurch gekennzeichnet, dass** zwei Führungsmittel (52) vorgesehen sind, die so ausgebildet sind, dass sie die Leiterenden (45) in axialer Richtung aus einer Armatur (10) der elektrischen Maschine (1) leiten.

4. Elektrische Maschine (1) gemäß einem der vorhergehenden Ansprüche, **dadurch gekennzeichnet, dass** ein zweites Zentrierelement (94) vorgesehen ist, welches mindestens zwei Durchgangsöffnung (96) aufweist, wobei jedes Leiterende (45) jeweils durch eine der Durchgangsausnehmungen (96) des zweites Zentrierelements (94) verläuft.

5. Elektrische Maschine (1) gemäß einem der vorhergehenden Ansprüche, **dadurch gekennzeichnet, dass** die Leiterplatte (92) für jedes Leiterende (45) eine Lötbohrung (93) aufweist, an denen die Leiterenden (45) angeordnet und angelötet sind.

6. Verfahren (100) zum Herstellen einer elektrischen Maschine (1) mit einem Gehäuseelement (5) gemäß einem der vorhergehenden Ansprüche, wobei das Verfahren die folgenden Schritte aufweist:
• Herausführen (110) der Leiterenden (45) des elektrischen Leiters (42) in axialer Richtung der elektrischen Maschine (1) aus der Armatur (10),
• Durchführen (120) der Leiterenden (45) durch Durchgangsöffnungen (67) eines Zentrierelements (66), wobei das Zentrierelement (66) Zentriermittel (69) aufweist, welche die durchgeführten Leiterenden (45) zentrieren und parallel ausrichten, wobei sich die Durchgangsöffnungen (67) des Zentrierelements (66) jeweils durch eines der Zentriermittel (69) erstrecken und einen trichterförmigen Bereich aufweisen, wobei ein Teil des trichterförmigen Bereichs innerhalb des Zentriermittels (69) des Zentrierelements (66) ausgebildet ist, wobei die durchgeführten Leiterenden (45) aus dem Zentrierelement (66) heraustreten, wobei die Zentriermittel (69) des Zentrierelements (66) eine Zentrierung der Leiterenden (45) und eine Ausrichtung der Leiterenden (45) in axiale Richtung der elektrischen Maschine (1) bewirken, wobei ein Durchführen der Leiterenden (45) durch ein axiales Verschieben des Zentrierelements (66) in Richtung der Armatur (10) erreicht wird, wobei ein Leiterende (45) beim Einführen des Leiterendes (45) in das Zentriermittel (69) radial ausgerichtet wird,
• Durchführen (125) der Leiterenden (45) durch Durchgangsöffnungen (73) eines Dichtelements (72), wobei die durchgeführten Leiterenden (45) aus dem Dichtelement (72) heraustreten, wobei die Zentriermittel (69) jeweils zumindest teilweise innerhalb einer der Durchgangsöffnungen (73) des Dichtelements (72) angeordnet sind,
• Durchführen der Leiterenden durch jeweils mindestens ein Dichtmittel (75) des Dichtelements (72), durch welches sich die Durchgangsöffnung (73) des Dichtelements (72) erstreckt,
• Einführen (130) der Zentriermittel (69) in jeweils eine Durchgangsöffnung (73) eines Dichtelements (72), wobei die in den Durchgangsöffnungen (73) des Dichtelements (72) verlaufenden Leiterenden (45) über die Zentriermittel (69) geführt werden,
• Anordnen (135) des Dichtelements (72) zumindest teilweise innerhalb einer Durchgangsöffnung (6) des Gehäuseelements (5), und
• elektrisches Kontaktieren (140) der Leiterenden (45) mit der Leiterplatte (92).

7. Verfahren (100) gemäß dem Anspruch 6, **gekennzeichnet durch** den Schritt:
• Kürzen (115) der Leiterenden (45), insbesondere auf die erforderliche, vorzugsweise die gleiche Länge.

8. Verfahren (100) gemäß dem Anspruch 6 oder 7, **gekennzeichnet durch** den Schritt:
• Zumindest teilweises Entfernen (145) der Isolierung an den Leiterenden (45), wobei insbesondere das Entfernen der Isolierung an den Leiterenden (45) mit umlaufenden Messern oder Laser durchgeführt wird.

9. Verfahren (100) gemäß einem der Ansprüche 6 bis 8, **gekennzeichnet durch** den Schritt:
• Elektrisches Kontaktieren der Leiterplatte (92) mit den Leiterenden (45) mittels Weichlöten, insbesondere mittels eines Selektivlötverfahrens, vorzugsweise ein Multiwelle Verfahren oder mittels eines der folgenden Verfahren: Miniwelle, Handlöten, Laserlöten oder induktives Löten durchgeführt wird.

10. Verfahren (100) gemäß einem der Ansprüche 6 bis 9, **gekennzeichnet durch** den Schritt:
• Anbringen (150) der Armatur (10) an einem Gehäuseelement (5), insbesondere mittels Verschrauben.

11. Verfahren (100) gemäß einem der Ansprüche 6 bis 10, **gekennzeichnet durch** den Schritt:
• Durchführen (155) der Leiterenden (45) durch jeweils mindestens eine Durchgangsöffnung (96) eines zweiten Zentrierelements (94), wobei das zweite Zentrierelement (94) ein Zentriermittel (97) aufweist, welches die durchgeführten Leiterenden (45) zentriert und parallel ausrichtet, wobei die Leiterenden (45) nach der Durchführung aus dem zweiten Zentrierelement (94) hinausragen.

## Claims

1. Electric machine (1) having
• at least one electrical conductor (42),
• an armature (10) with a plurality of teeth, wherein at least one winding (40), which is formed by the electrical conductor (42), is formed on one of the teeth,
• a centring element (66) with at least two through-openings (67) and
• a sealing element (72) with at least two through-openings (73),
• wherein the electrical conductor (42) has two conductor ends, which each extend through one of the through-openings (67, 73) of the centring element (66) and the sealing element (72),
• wherein the sealing element (72) has a base body (74) and at least two sealing means (75), wherein each of the through-openings (73) of the sealing element (72) extends through the base body (74) and one of the sealing means (75), and
• wherein the conductor ends (45) extending through the sealing element (75) and the centring element (66) project out of these, and
• wherein the conductor ends (45) are electrically connected to a printed circuit board (92) by soldering, in particular at their ends,
**characterized in that**
• the centring element (66) has a base body (68) and at least two centring means (69), wherein each of the through-openings (67) of the centring element (66) extends through the base body (68) and one of the centring means (69), wherein the centring means (69) of the centring element (66) bring about a centring of the conductor ends (45) and an alignment of the conductor ends (45) in the axial direction, and
• wherein the centring means (69) are each arranged at least partially within one of the through-openings (73) of the sealing element (72),
• wherein the conductor ends (45) extending in the through-openings (73) of the sealing element (72) are guided by way of the centring means (69),
• wherein each of the through-openings (67) of the centring element (66) has a funnel-shaped region, wherein part of the funnel-shaped region of the through-openings (67) is formed within a centring means (69),
• wherein at least one of the through-openings (73) of the sealing element (72) has a funnel-shaped region.

2. Electric machine (1) according to the preceding claim, **characterized in that** a housing (5) is provided with a through-opening (6), wherein the through-opening (6) is formed so as to correspond to the outer circumference of the sealing element (72).

3. Electric machine (1) according to either of the preceding claims, **characterized in that** two guide means (52) are provided, which are formed such that they route the conductor ends (45) out of an armature (10) of the electric machine (1) in an axial direction.

4. Electric machine (1) according to one of the preceding claims, **characterized in that** a second centring element (94) is provided, which has at least two through-openings (96), wherein each conductor end (45) extends through a respective one of the through-recesses (96) of the second centring element (94).

5. Electric machine (1) according to one of the preceding claims, **characterized in that** the printed circuit board (92) has a solder hole (93) for each conductor end (45), the conductor ends (45) being arranged and soldered at the solder holes.

6. Method (100) for producing an electric machine (1) having a housing element (5) according to one of the preceding claims, wherein the method comprises the following steps:
• guiding (110) the conductor ends (45) of the electrical conductor (42) out of the armature (10) in the axial direction of the electric machine (1),
• guiding (120) the conductor ends (45) through through-openings (67) of a centring element (66), wherein the centring element (66) has centring means (69) which centre the guided-through conductor ends (45) and align them in parallel, wherein the through-openings (67) of the centring element (66) each extend through one of the centring means (69) and have a funnel-shaped region, wherein part of the funnel-shaped region is formed within the centring means (69) of the centring element (66), wherein the guided-through conductor ends (45) emerge from the centring element (66), wherein the centring means (69) of the centring element (66) bring about a centring of the conductor ends (45) and an alignment of the conductor ends (45) in the axial direction of the electric machine (1), wherein the conductor ends (45) are guided through by axial displacement of the centring element (66) in the direction of the armature (10), wherein a conductor end (45) is radially aligned when the conductor end (45) is inserted into the centring means (69),
• guiding (125) the conductor ends (45) through through-openings (73) of a sealing element (72), wherein the guided-through conductor ends (45) emerge from the sealing element (72), wherein the centring means (69) are each arranged at least partially within one of the through-openings (73) of the sealing element (72),
• guiding the conductor ends through at least one respective sealing means (75) of the sealing element (72) through which the through-opening (73) of the sealing element (72) extends,
• inserting (130) the centring means (69) into a respective through-opening (73) of a sealing element (72), wherein the conductor ends (45) extending in the through-openings (73) of the sealing element (72) are guided by way of the centring means (69),
• arranging (135) the sealing element (72) at least partially within a through-opening (6) of the housing element (5), and
• establishing electrical contact (140) between the conductor ends (45) and the printed circuit board (92) .

7. Method (100) according to Claim 6, **characterized by** the step of:
• shortening (115) the conductor ends (45), in particular to the required, preferably the same, length.

8. Method (100) according to Claim 6 or 7, **characterized by** the step of:
• at least partially removing (145) the insulation from the conductor ends (45), wherein in particular the insulation is removed from the conductor ends (45) using rotating blades or lasers.

9. Method (100) according to one of Claims 6 to 8, **characterized by** the steps of:
• establishing electrical contact between the printed circuit board (92) and the conductor ends (45) by means of soft-soldering, in particular by means of a selective soldering process, preferably a multi-wave process or by means of one of the following processes: mini-wave, manual soldering, laser soldering or inductive soldering.

10. Method (100) according to one of Claims 6 to 9, **characterized by** the steps of:
• attaching (150) the armature (10) to a housing element (5), in particular by means of a screw-fastening.

11. Method (100) according to one of Claims 6 to 10, **characterized by** the step of:
• guiding (155) the conductor ends (45) through at least one respective through-opening (96) of a second centring element (94), wherein the second centring element (94) has a centring means (97) which centres the guided-through conductor ends (45) and aligns them in parallel, wherein the conductor ends (45), after they are guided through, project out of the second centring element (94).

## Revendications

1. Machine électrique (1) comportant
• au moins un conducteur électrique (42),
• une armature (10) pourvue d'un grand nombre de dents, au moins un enroulement (40), qui est formé par le conducteur électrique (42), étant formé sur l'une des dents,
• un élément de centrage (66) pourvu d'au moins deux ouvertures traversantes (67) et
• un élément d'étanchéité (72) pourvu d'au moins deux ouvertures traversantes (73),
• le conducteur électrique (42) comportant deux extrémités de conducteur qui s'étendent chacune à travers l'une des ouvertures traversantes (67, 73) de l'élément de centrage (66) et de l'élément d'étanchéité (72),
• l'élément d'étanchéité (72) comportant un corps de base (74) et au moins deux moyens d'étanchéité (75), chacune des ouvertures traversantes (73) de l'élément d'étanchéité (72) s'étendant à travers le corps de base (74) et un des moyens d'étanchéité (75), et
• les extrémités de conducteur (45), qui s'étendent à travers l'élément d'étanchéité (75) et l'élément de centrage (66), faisant saillie de ceux-ci, et
• les extrémités de conducteur (45), notamment à leurs extrémités, étant reliées électriquement à une carte de circuit imprimé (92) par soudage,
**caractérisée en ce que**
• l'élément de centrage (66) comporte un corps de base (68) et au moins deux moyens de centrage (69), chacune des ouvertures traversantes (67) de l'élément de centrage (66) s'étendant à travers le corps de base (68) et l'un des moyens de centrage (69), les moyens de centrage (69) de l'élément de centrage (66) réalisant le centrage des extrémités de conducteur (45) et l'orientation des extrémités de conducteur (45) dans la direction axiale, et
• les moyens de centrage (69) étant chacun disposés au moins partiellement à l'intérieur de l'une des ouvertures traversantes (73) de l'élément d'étanchéité (72),
• les extrémités de conducteur (45) qui s'étendent dans les ouvertures traversantes (73) de l'élément d'étanchéité (72) étant guidées par le biais des moyens de centrage (69),
• chacune des ouvertures traversantes (67) de l'élément de centrage (66) comportant une zone en forme d'entonnoir, une partie de la zone en forme d'entonnoir des ouvertures traversantes (67) étant formée à l'intérieur d'un moyen de centrage (69),
• au moins une des ouvertures traversantes (73) de l'élément d'étanchéité (72) comportant une zone en forme d'entonnoir.

2. Machine électrique (1) selon les revendications précédentes, **caractérisée en ce qu'**un boîtier (5) pourvu d'une ouverture traversante (6) est prévu, l'ouverture traversante (6) étant formée en correspondance de la périphérie extérieure de l'élément d'étanchéité (72).

3. Machine électrique (1) selon l'une des revendications précédentes, **caractérisée en ce que** deux moyens de guidage (52) sont prévus qui sont conçus pour diriger les extrémités de conducteur (45) dans la direction axiale hors d'une armature (10) de la machine électrique (1).

4. Machine électrique (1) selon l'une des revendications précédentes, **caractérisée en ce qu'**un deuxième élément de centrage (94) est prévu qui comporte au moins deux ouvertures traversantes (96), chaque extrémité de conducteur (45) s'étendant à travers l'une des ouvertures traversantes (96) du deuxième élément de centrage (94).

5. Machine électrique (1) selon l'une des revendications précédentes, **caractérisée en ce que** la carte de circuit imprimé (92) comporte pour chaque extrémité de conducteur (45) un trou de soudage (93) au niveau duquel les extrémités de conducteur (45) sont disposées et soudées.

6. Procédé (100) de fabrication d'une machine électrique (1) comprenant un élément de boîtier (5) selon l'une des revendications précédentes, le procédé comportant les étapes suivantes :
• faire sortir (110) les extrémités de conducteur (45) du conducteur électrique (42) dans la direction axiale de la machine électrique (1) hors de l'armature (10),
• guider (120) les extrémités de conducteur (45) à travers des ouvertures traversantes (67) d'un élément de centrage (66), l'élément de centrage (66) comportant des moyens de centrage (69) qui centrent les extrémités de conducteur (45) guidées et les orientent parallèlement, les ouvertures traversantes (67) de l'élément de centrage (66) s'étendant chacune à travers l'un des moyens de centrage (69) et comportant une zone en forme d'entonnoir, une partie de la zone en forme d'entonnoir étant formée à l'intérieur du moyen de centrage (69) de l'élément de centrage (66), les extrémités de conducteur (45) guidées sortant de l'élément de centrage (66), les moyens de centrage (69) de l'élément de centrage (66) réalisant le centrage des extrémités de conducteur (45) et l'orientation des extrémités de conducteur (45) dans la direction axiale de la machine électrique (1), un guidage des extrémités de conducteur (45) étant obtenu par coulissement axial de l'élément de centrage (66) dans la direction de l'armature (10), une extrémité de conducteur (45) étant orientée radialement lors de l'introduction de l'extrémité de conducteur (45) dans le moyen de centrage (69),
• guider (125) les extrémités de conducteur (45) à travers des ouvertures traversantes (73) d'un élément d'étanchéité (72), les extrémités de conducteur (45) guidées sortant de l'élément d'étanchéité (72), les moyens de centrage (69) étant chacun disposés au moins partiellement à l'intérieur d'une des ouvertures traversantes (73) de l'élément d'étanchéité (72),
• guider les extrémités de conducteur à travers au moins un moyen d'étanchéité (75) de l'élément d'étanchéité (72) à travers lequel s'étend l'ouverture traversante (73) de l'élément d'étanchéité (72),
• introduire (130) chacun des moyens de centrage (69) dans une ouverture traversante (73) d'un élément d'étanchéité (72), les extrémités de conducteur (45) qui s'étendent jusque dans les ouvertures traversantes (73) de l'élément d'étanchéité (72) étant guidées par le biais des moyens de centrage (69),
• disposer (135) l'élément d'étanchéité (72) au moins partiellement dans une ouverture traversante (6) de l'élément de boîtier (5), et
• mettre (140) les extrémités de conducteur (45) en contact électrique avec la carte de circuit imprimé (92) .

7. Procédé (100) selon la revendication 6, **caractérisé par** l'étape suivante :
• raccourcir (115) les extrémités de conducteur (45), notamment à la longueur requise, de préférence à la même longueur.

8. Procédé (100) selon la revendication 6 ou 7, **caractérisé par** l'étape suivante :
• enlever au moins partiellement (145) l'isolant sur les extrémités de conducteur (45), en particulier l'enlèvement de l'isolant sur les extrémités de conducteur (45) étant effectué avec des couteaux rotatifs ou par laser.

9. Procédé (100) selon l'une des revendications 6 à 8, **caractérisé par** l'étape suivante :
• mettre la carte de circuit imprimé (92) en contact électrique avec les extrémités de conducteur (45) par brasage tendre, notamment par un procédé de brasage sélectif, de préférence un procédé multi-ondes ou par un des procédés suivants : brasage minivague, brasage à la main, brasage au laser ou brasage par induction.

10. Procédé (100) selon l'une des revendications 6 à 9, **caractérisé par** l'étape suivante :
• fixer (150) l'armature (10) à un élément de boîtier (5), notamment par vissage.

11. Procédé (100) selon l'une des revendications 6 à 10, **caractérisé par** l'étape suivante :
• guider (155) les extrémités de conducteur (45) à travers au moins une ouverture traversante (96) d'un deuxième élément de centrage (94), le deuxième élément de centrage (94) comportant un moyen de centrage (97) qui centre les extrémités de conducteur (45) guidées et les orientent parallèlement, les extrémités de conducteur (45) faisant saillie du deuxième élément de centrage (94) après le guidage.
